# EUROPEAN PATENT SPECIFICATION

(11) **EP 4 723 470 B1**
(45) Date of publication and mention of the grant of the patent: **07.10.2026**
(21) Application number: 24204983.1
(22) Date of filing: 07.10.2024
(51) Int. Cl.: H02P 25/06, H02P 6/00, B60G 17/06, B60G 13/14

(54) **COMPUTER SYSTEM AND COMPUTER-IMPLEMENTED METHOD CONFIGURED TO CONTROL A LINEAR MACHINE OF A VEHICLE**
COMPUTERSYSTEM UND COMPUTERIMPLEMENTIERTES VERFAHREN ZUR STEUERUNG EINER LINEAREN FAHRZEUGMASCHINE
SYSTÈME INFORMATIQUE ET MÉTHODE IMPLÉMENTÉE PAR ORDINATEUR CONFIGURÉS POUR COMMANDER UNE MACHINE LINÉAIRE D'UN VÉHICULE

(43) Date of publication of application: 08.04.2026
(73) Proprietor: Volvo Construction Equipment AB, 631 85 Eskilstuna (SE)
(72) Inventor: GUSTAFSSON, Filip, ESKILSTUNA (SE); WAHID, Ferdus, ESKILSTUNA (SE)
(74) Representative: Ström & Gulliksson AB

(56) References cited:
- US-A1- 2005 258 790
- US-A1- 2009 273 147

## Description

### TECHNICAL FIELD

The disclosure relates generally to a vehicle. **In** particular aspects, the disclosure relates to an alternative suspension system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy-duty vehicles, such as trucks, are frequently subjected to substantial loads and harsh driving conditions, necessitating a suspension system that can effectively manage the stresses and strains involved. Traditional suspension systems often fail to provide the necessary balance between load-bearing capacity, ride comfort, and durability, particularly under variable load conditions and rough terrains. There is a need for an improved suspension system that can overcome these limitations.

US 2009 273147 A1 discloses a system including four electromagnetic absorbers for respective four vehicle wheels, each of the electromagnetic absorbers includes a damping-force generating device and is selectively controlled between a passive control in which the damping force is generated mainly by utilizing the electromotive force generated in the damping-force generating device of each electromagnetic absorber; and an active control in which the damping force is generated by supplying the electric power from the power source to the damping-force generating device of each electromagnetic absorber.

### SUMMARY

A first aspect of the disclosure is defined in the computer system according to independent claim 1. The first aspect of the disclosure may seek to enhance the efficiency of energy usage in vehicles by utilizing stator coils for both actuation and energy generation. A technical benefit may include improving the energy efficiency of vehicles by enabling dual functionality of stator coils, which may reduce energy waste and enhance the overall performance of the vehicle.

Optionally in some examples, including in at least one preferred example, the computer system is further configured to control the behavior of the stator coils so that electrical resonance is achieved. A technical benefit may include enhancing the efficiency of energy transfer within the system by optimizing resonance conditions.

Optionally in some examples, including in at least one preferred example, further configured to obtain a target electromagnetic resonance frequency, determine a delta between the determined electromagnetic resonance frequency and the target electromagnetic resonance frequency, and control the behavior of at least the first stator coil and/or at least the second stator coil based on said target electromagnetic resonance frequency. A technical benefit may include fine-tuning the system for optimal performance by adjusting to target resonance frequencies.

Optionally in some examples, including in at least one preferred example, further configured to determine a magnetic pole position of the permanent magnets of the actuator. A technical benefit may include enhancing accuracy in controlling magnet interactions within the motor.

Optionally in some examples, including in at least one preferred example, wherein the magnetic pole position is determined based on sensor data received from at least one sensor. A technical benefit may include increasing the precision of magnetic pole determination by utilizing sensor data.

Optionally in some examples, including in at least one preferred example, further configured to control the flow of current in at least the first stator coil, wherein said control of the flow of current is based on the determined magnetic pole position of the actuator and the determined delta. A technical benefit may include optimizing current flow to improve motor efficiency and performance.

Optionally in some examples, including in at least one preferred example, further configured to control the current flow in the first stator coil and the second stator coil based on the determined magnetic pole position of the actuator and the electromagnetic resonance frequency. A technical benefit may include synchronizing coil current flow with magnetic position and resonance for improved motor dynamics.

Optionally in some examples, including in at least one preferred example, further configured to control the phase of the plurality of permanent magnets of the actuator. A technical benefit may include enhancing the coordination of magnetic forces to improve the overall efficiency and effectiveness of the system.

Optionally in some examples, including in at least one preferred example, further configured to dynamically adjust the power output of the second stator coil based on the energy demand of the vehicle's energy storage system. A technical benefit may include enhancing the energy efficiency by matching power output with demand, minimizing energy waste.

Optionally in some examples, including in at least one preferred example, further configured to synchronize the electromagnetic field of the first stator coil with an external magnetic field to optimize propulsion efficiency. A technical benefit may include reducing energy consumption by aligning with external magnetic influences for improved propulsion.

Optionally in some examples, including in at least one preferred example, further comprising a feedback control loop to monitor and adjust the electromagnetic field strength of the first stator coil in real-time. A technical benefit may include maintaining optimal electromagnetic performance by adapting to real-time conditions.

Optionally in some examples, including in at least one preferred example, further configured to store data related to electromagnetic resonance frequencies and stator coil behaviors in a database for performance analysis and optimization. A technical benefit may include enhancing future system performance through data-driven insights and adjustments.

Optionally in some examples, including in at least one preferred example, further configured to switch the role of the first stator coil from electromagnet to generator during regenerative braking scenarios. A technical benefit may include increasing energy recovery during braking, contributing to extended vehicle range.

A vehicle comprising the computer system of the first aspect, a linear generator comprising an actuator having a plurality of permanent magnets, and at least one stator comprising at least a first stator coil and second stator coil, wherein the vehicle further comprises an energy storage system. The second aspect of the disclosure may seek to enhance the efficiency of energy usage in vehicles by utilizing stator coils for both propulsion and energy generation. A technical benefit may include improving the energy efficiency of vehicles by enabling dual functionality of stator coils, which may reduce energy waste and enhance the overall performance of the vehicle.

Optionally in some examples, including in at least one preferred example, the vehicle further comprises a power electronic converter and one or more DC-to-DC converters. A technical benefit may include facilitating efficient power management and conversion, thereby improving the energy distribution and utilization within the vehicle's electrical system.

A third aspect of the disclosure is defined in the computer-implemented method of independent claim 11. The third aspect of the disclosure may seek to enhance the efficiency of energy usage in vehicles by utilizing stator coils for both propulsion and energy generation. A technical benefit may include improving the energy efficiency of vehicles by enabling dual functionality of stator coils, which may reduce energy waste and enhance the overall performance of the vehicle.

A fourth aspect of the disclosure is defined in the computer program product of independent claim 12. The fourth aspect of the disclosure may seek to enable new off-road vehicles and/or construction equipment to be conveniently configured, by software installation/update, to enhance the efficiency of energy usage in vehicles by utilizing stator coils for both propulsion and energy generation. A technical benefit may include improving the energy efficiency of vehicles by enabling dual functionality of stator coils, which may reduce energy waste and enhance the overall performance of the vehicle.

A fifth aspect of the disclosure is defined in the non-transitory computer-readable storage medium of independent claim 13. . The fifth aspect of the disclosure may seek to enable new off-road vehicles and/or construction equipment to be conveniently configured, by software installation/update, to enhance the efficiency of energy usage in vehicles by utilizing stator coils for both actuation and energy generation. A technical benefit may include improving the energy efficiency of vehicles by enabling dual functionality of stator coils, which may reduce energy waste and enhance the overall performance of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary view of a vehicle according to an example.
**FIG. 2** is an exemplary view of a system according to an example.
**FIG. 3** is an exemplary view of a system according to an example.
**FIG. 4** is an exemplary system diagram of a computer system according to an example.
**FIG. 5** is a flow chart of an exemplary method according to an example.
**FIG. 6** is a flow chart of an exemplary method according to an example.
**FIG. 7** is a flow chart of an exemplary method according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Prior art vehicles are arranged with a suspension system typically comprising a primary suspension members in the form of one or more springs that are mounted between the vehicle's chassis and axle to provide the primary load-bearing function. The suspension system of prior art systems further comprises shock absorbers, for example hydraulic or gas-filled shock absorbers placed in alignment with the primary suspension members, and that are configured to dampen oscillations and vibrations caused during travel.

The inventors of the present case have identified that an ordinary suspension system can be replaced by linear machine, for example caused by a linear generator that is connected to power electronics converters. The linear generator will act as a suspension system while at the same time utilize the actuation to produce electrical power. This may have the technical benefit that the system can produce power during the loading cycles of the vehicles and thus provide longer operation time and less stress of the batteries.

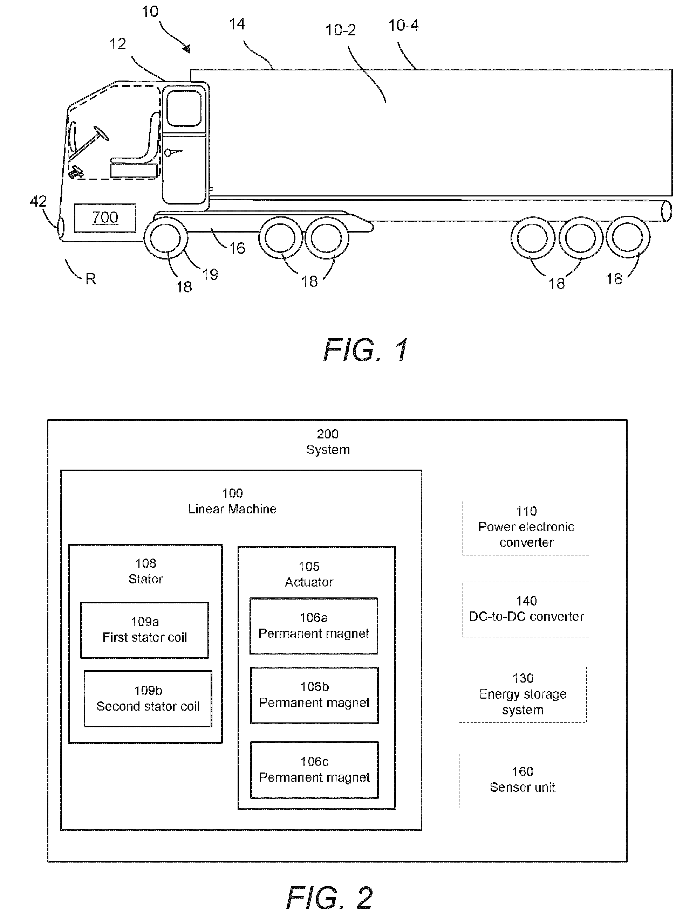

**FIG. 1** **is** an exemplary schematic illustration of a heavy-duty vehicle **10** (hereinafter referred to vehicle **10** for reasons of brevity). This particular example comprises a tractor unit **12** which is arranged to tow a trailer unit **14.** The vehicle combination may of course also comprise additional vehicle units, such as one or more dolly units and more than one trailer unit. Although the vehicle is illustrated as a tractor unit, it should be realized that other types of vehicles may be equally considered for the purpose of the herein described method such as busses, construction equipment, trucks, etc. As a non-limiting example, the vehicle **10** may be a dump truck, transfer dump truck, tipper truck, side dump truck, roll-off truck, live bottom trailer, or haul trucks. Although not explicitly visualized in the figure, the skilled person will appreciate that the vehicle **10** comprises all necessary vehicle units and associated functionality such that it may operate as the skilled person would expect of a vehicle **10.**

The vehicle **10** is supported by wheels **19,** where each wheel comprises a tire **18.** The tractor unit **12** has front wheels which are normally steered, and rear wheels of which at least one pair are driven wheels. Generally, the rear wheels of the tractor **12** may be mounted on tag or pusher axles. A tag axle is where the rear-most drive axle is non-powered, also referred to as a free-rolling or dead axle. A pusher axle is where the forward-most drive axle is not powered. The trailer unit **14** is supported on trailer wheels. Trailers with driven wheels, and even a steered axle, are also possible.

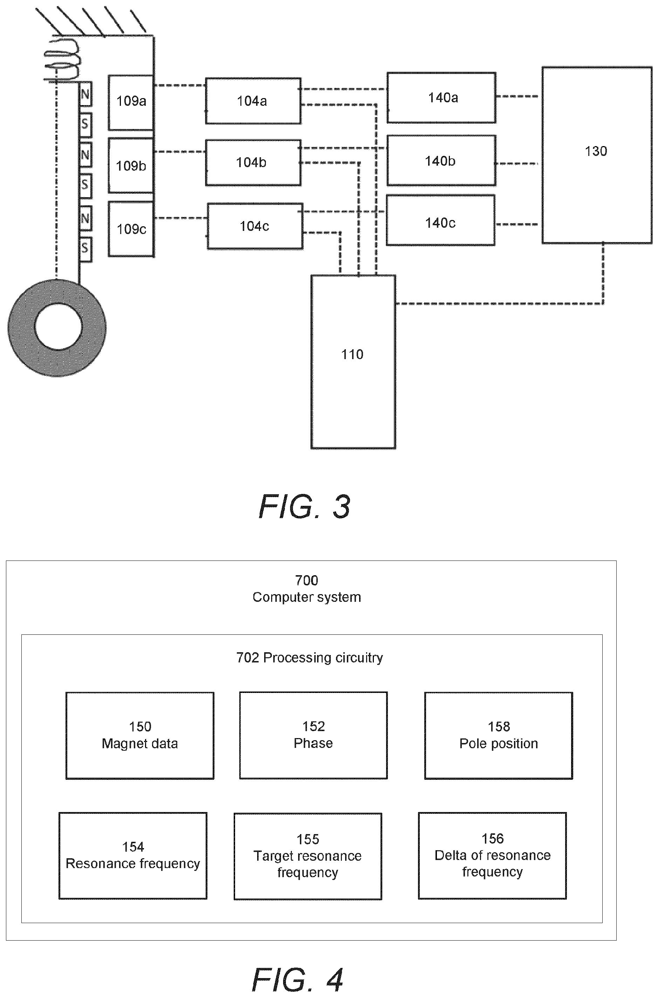

The vehicle **10** further comprises a computer system **700** comprising processing circuitry **702.** The computer system **700** will be described more in detail with reference to **FIG. 4****.** The computer system **700** may comprises a vehicle control unit (VCU) arranged to control various functions of the vehicle **10.** For instance, the VCU may be arranged to perform a vehicle motion management (VMM) function comprising control of wheel slip, vehicle unit stability, and so on. The trailer unit optionally also comprises a VCU, which then controls one or more functions on the trailer. The VCU or VCUs may be communicatively coupled, e.g., via wireless link, to a remote server. This remote server may be arranged to perform various configurations of the ECU, and to provide various forms of data to the ECU, such as for example providing data regarding the make and type of tires mounted on the vehicle. The trailer unit **14** optionally also comprises one or more electronic control units (ECUs), which may be adapted to control one or more functionalities of the trailer unit **12.**

The vehicle **10** further comprises a linear machine **100.** The linear machine **100** can be driven in a motor mode and a generator mode. The placement of the linear machine **100** may vary. In one example the linear machine **100** is arranged between the chassis and the axle. In one alternative example, the linear motor is part of the drivetrain, typically arranged along the axles or near the wheel hubs. Yet further, the linear machine can be arranged in the suspension system. The linear machine **100** shown in **FIG. 1** is schematically arranged, and will be discussed more in detail with reference to **FIG. 2****.**

**FIG. 2** is a schematic illustration of a system **200.** The system **200** comprises a linear machine **100.** The linear machine **100** comprises at least one stator **108.** The stator **108** may comprise a plurality of electromagnetic coils **109a-b.** In one example, the stator comprises a first stator coil **109a** and a second stator coil **109b.** However, a large number of coils could be arranged in the stator **108.** The stator coils **109a-b** may be arranged along the length of the motor. These coils **109a-b** are designed to generate a magnetic field when energized by an electrical current. In some examples, the stator may be encased in a protective housing to shield it from environmental elements such as dust, moisture, and debris commonly encountered in heavy-duty vehicle operations. In one example, the stator **108** is arranged at the chassis of the vehicle. As is known in the art, the stator **108** is a fixed, or stationary, component that creates magnetic field in response to an electric current. In one example, the first stator coil **109a** has an electrical current that flows in a first direction. As will soon be described, the flow of direction could be changed. In the situation where the flow of current is reversed, the flow of current will be in a second direction. The first direction is preferably opposite to the second direction. As will soon be described more in detail with reference to **FIG. 4****,** the at least one stator **108** of the linear machine **100** can be controlled, by a computer system **700,** so to at least partly act as a linear generator.

The linear machine **100** further comprises an actuator **105.** In one example, the actuator is a linear actuator. In one example, the actuator **105** can be seen as a mover that moves in response to the magnetic field produced by the stator.

In one example, the actuator **105** comprises a plurality of permanent magnets **106a-c.** In the illustration of **FIG. 2****,** three permanent magnets **106a-c** are shown. However, as should be understood by a person skilled in the art, any number of permanent magnets **106a-c** could be present in the actuator **105.** The permanent magnets **106a-c** is composed of a ferromagnetic material. In one example, the material is iron, nickel, cobalt or an alloy thereof. The material is preferably such that it has the inherent ability to form magnetic domains, i.e. regions within the material where the magnetic moments of atoms are aligned in the same direction. When the material is subjected to an external magnetic field, a force is applied on the magnetic moments of the atoms. The external magnetic field causes the majority of the magnetic domains to align in a uniform direction, thereby inducing a net magnetic field within the material. Due to the intrinsic properties of the ferromagnetic material, the aligned domain remain in their oriented stated once the external magnetic field is removed.

The system **200** further comprises an energy storage system **130.** In one example the energy storage system **130** is a battery. In one example the energy storage system **130** is a super-capacitor (a supercap, ultracapacitor, or electrochemical double-layer capacitor (EDLC)) which stores energy electrostatically. In one example, the energy storage system is an hybrid energy storage system. In one example, the energy storage system comprises a super-capacitor and/or a battery. The energy storage system **130** may be configured to store energy generated from the at least one stator **108** when it acts as a linear generator.

The system **200** may further comprise a power electronic converter (PEC) **110.** The power electronic converter **110** is in operative communication with the at least one stator **108.** The power electronic converter **110** is preferably configured to transfer energy from the stator **108,** when it acts as a generator, to the energy storage system **130.** In one example, the power electronic converter **110** is a rectifier. As is known in the art, a rectifier converts AC to DC. The power electronic converter **110** may be configured to transfer a regularized electricity, generated by the stator **108** acting as a generator, to the energy storage unit **130.**

The system **200** may further comprise one or more DC-to-DC converters **140.** As is known in the art, a DC-to-DC converter converts a source of direct current form one voltage level to another and will thus not be discussed further. The one or more DC-to-DC converters **140** are in operative communication with the energy storage system **130.**

The system **200** may further comprise a sensor unit **160.** The sensor unit **160** may for example be a Hall effect sensor and/or fluxgate magnetometers. The sensor unit **160** may further be an anisotropic magnetoresistance sensor.

In one example, the hydraulic suspension of the vehicles can be replaced by linear actuation such as linear generator integrated with power electronics converters. Replacing the hydraulic suspension with linear generator will keep same performance as before and will also utilize the actuation to produce electrical power.

The present invention provides a solution to produce power during the loading cycle of the machines/ cars/ trucks which will provide longer operation time and less stress on the battery in the case of higher power demands by the machines.

In one example, the suspension system can be replaced by the linear generator. The part stator of the linear generator can act as electromagnet and Stator. During upward motion of the actuator the part of the stator can work as electromagnet to create repel the actuator and act as an electric spring along with a mechanical spring and will produce more energy by keeping it in electric resonance. The electrical wire of the linear generator can be connected to the power electronic converters via junction box or to the bus bars with protection for short circuit and electrical faults. The o/p power of linear generator can be utilized through rectifiers (active or passive). The damping of the linear generator can be controlled to match the existing damping of the suspension while maintaining dynamic charging of the battery for the actuation of linear generator in both directions..

In one example, the power from the linear generator can be stored in battery directly, introducing super capacitor in the system or feeding the power directly to the system. In case of feeding the power directly or adding a super capacitor needs an update for dynamic power demand calculation to reduce the load from the battery.

**FIG. 3** shows one example of a system **200.** In this specific example, the system 200 comprises a plurality of stator coils **109a-c** each having a north pole N and south pole S. Each stator coil **109a-c is** connected to a contactor **104a-c.** The contactor **104a-c** may include protective circuit(s). Each stator coil **109a-c** is in operative communication with a DC-to-DC converter **140.** The DC-to-DC converters **140** are in turn in operative communication with an energy storage system **130.** Each stator coil **109a-c** is in operative communication with an electronic converter **110.**

Now turning to **FIG. 4****,** a schematic illustration of functions of the computer system **700** having a processing circuitry **702** is shown. The processing circuitry **702** is configured to control the behavior of at least the first stator **coil 109a** so that it is configured to act as an electromagnet creating an electromagnetic field, and to control the behavior of at least the second stator **coil 109b** so that it is configured to act as a generator **100.** Hence, each stator coil **109a-b** can act both as an electromagnet and a generator independently. The processing circuitry **702** is configured to dynamically control which coils **109a-b** that are to act as a generator or electromagnet.

In one example, controlling the behavior of the first stator **coil 109a** is performed by reversing the flow of current in at least the first stator coil **109a.** The reverse of flow of current is performed by feeding energy into at least the first stator **coil 109a** so that at least the first stator **coil 109a** is configured to act as an electromagnet. In one example, the energy being fed is received from an energy storage system **130.** In one example, if the initial electrical flow was in a first direction, the new reversed direction will be a second direction.

The windings of the stator, configured to act as a generator, can be converted into electromagnets by reversing the current flow towards the coils, hence instead of extracting current from the stator coils, the energy storage system **130** feeds current into the coils. The polarity of the electromagnet coils (reversing the current flow in the stator coils) needs to be in phase or out of phase of the mounted permanent magnets on the actuator. This will in turn attract or repel the actuator and thus increase or decrease the linear actuation of the generator, keeping the electromagnetic resonance, where rest of the stator coils will extract power. When the I/P force is high enough, the active rectifier **110** will draw more current which will be stored in the energy storage system **130.** The energy storage system **130** is controlled in a way so that the electrical resonance is achieved along with the electromagnetic resonance by pushing current from the energy storage system **130** to stator coils. The energy storage system **130** may further be controlled so as to produce additional current that is stored in the energy storage system. The processing circuitry **702** may be configured to receive magnet data **150.** The magnet data **150** may be received from the sensor unit **160.**

The processing circuitry **702** may further be configured to control the phase **152** (or phase alignment) of the plurality of permanent magnets. The phase relates to the relative orientation and synchronization of the magnetic fields generated by each magnet. The phase may be determined based on magnet data. In one example, data from the magnets are analyzed to determine the orientation of the magnetic field vectors associated with each magnet. The relative phase of each magnet may then be calculated based on the angular displacement of the magnetic field vectors.

The processing circuitry **702** may further be configured to determine a pole position **158** of the actuator **105.** The pole position **158** may refer to the orientation and/or location of the magnetic poles within the actuator **105.** The pole position may be determined based on the magnet data. The magnetic data **150** comprises magnetic field data which is used to map the magnetic flux and identify the positions of the poles. In one example, peak detection algorithms are used to determine precise locations of the magnetic poles. A peak detection algorithm identifies the points in the magnetic field map where the field strength is at its maximum (north pole) and minimum (south pole) and the positions of these peaks are recorded as the pole positions.

The processing circuitry **702** may further be configured to determine an electromagnetic resonance frequency **154** of the stator acting as a linear generator. The magnetic resonance frequency **154** is the frequency at which the magnetic system within the generator exhibits resonant behavior, optimizing energy transfer and efficiency.

The magnetic resonance frequency **154** may be determined based on inductance of the coils, capacitance and/or mechanical resonance. The magnetic resonance frequency can be determined by performing an initial frequency sweep where a range of frequencies are applied to the system. This may be made mechanically (by varying the input frequency of mechanical motion) or electrically (by exciting the coils with a variable frequency current). During the frequency sweep, sensors may be used to measure the response of the system. In one example measurements include voltage, current, vibration and/or displacement. The magnetic resonance frequency may be identified by detecting a peak in the response characteristics of the system, where this peak occurs at the frequency where the system's impedance is minimized, resulting in maximum energy transfer and output.

The processing circuitry **702** may further be configured to obtain a target magnetic resonance frequency **155.** The target magnetic resonance frequency **155** is preferably set by the manufacturer. The processing circuitry **702** may further be configured to determine a delta **156** between the determined magnetic resonance frequency and the target magnetic resonance frequency.

The processing circuitry **702** may further be configured to control the flow of current in at least the first stator coil **109a.** The control is based on the determined pole position of the actuator **105** and the determined magnetic resonance frequency. By controlling the flow of current the polarity of the first stator coil can be controlled.

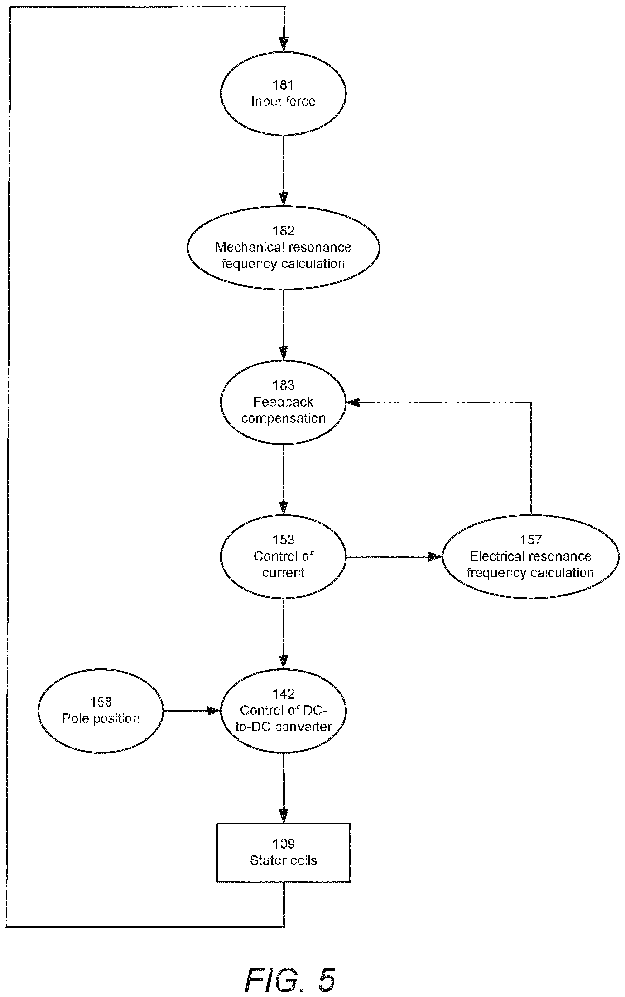

**FIG. 5** is a schematic illustration of an example of controlling the system **200** to be in a generator mode and motor mode. In the generator mode, the linear machine is capable of absorbing mechanical energy which can be used to replace a conventional damper. As soon will be described more in detail, the processing circuit **700** is configured to put parts of the system, such as the rotor/piston rod into resonance. As a result, maximum energy can be extracted from the oscillations as the amplitude of which is maximum.

In this example, an input force **181** is received by the processing circuitry **702.** The processing circuitry **702** is configured to determine a mechanical resonance frequency **182.** As is known in the art, the mechanical resonance frequency of a system is the natural frequency at which the system tends to oscillate with the maximum amplitude when subjected to a periodic external force or input **181.** It is determined by the system's physical properties, such as for example mass, stiffness, and damping. The mechanical resonance frequency **182** may be seen as a deflection. The deflection may refer to the displacement or movement of a part of the system from its original position due to applied forces **181.** When a system reaches its mechanical resonance frequency **182,** the amplitude of the deflection (or displacement) is maximized.

The processing circuitry **702** is configured to perform a feedback compensation based on the mechanical resonance frequency **182** and a determined electrical resonance frequency **157.**

The processing circuitry **702** is configured to control the current **153** in the system **200.** The output of the current control may be used to determine the electrical resonance frequency **157.** The aim is to extract power from the stator coil(s) acting as a generator to maintain electrical resonance.

The processing circuitry **702** is configured to control **142** the DC-to-DC converter. The control of the DC-to-DC may be based on the current and/ or voltage control **153.** The control of the DC-to-DC may further be based on the magnetic poles position **158.**

The plurality of stator coils **109** are controlled based on the output generated by the DC-to-DC-control. The plurality of stator coils **109** are controlled to so achieve either regenerative suspension or an adaptive suspension of the vehicle.

In one example, the processing circuitry **702** is configured to extract the dampening energy from the suspension of the vehicle by replacing the conventional fluid dampeners in the suspension. As the vehicle goes over bumps and holes in the road surface, the energy that would have been lost in the hydraulic dampeners to prevent unwanted oscillations in the suspension is harvested and used to charge the vehicle batteries and providing a longer runtime.

In one example, the processing circuitry **702** is in operative communication with a human-machinepo-interface (HMI) in order to let the user set different suspension profiles according to their preference. Hence, in this example different amount of energy can be extracted from the suspension thus leading to different dampening characteristics of the vehicle.

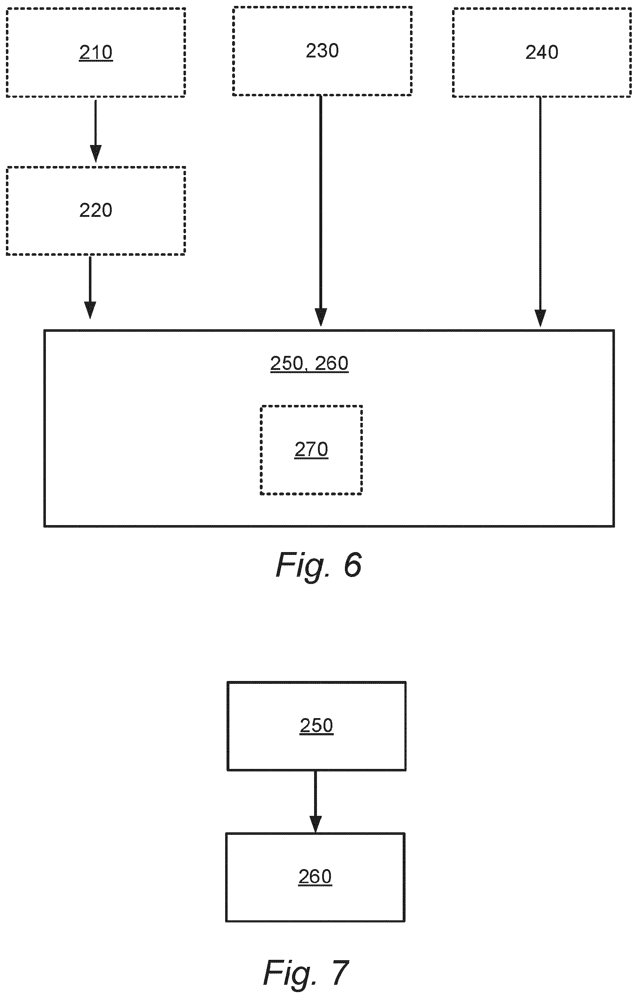

**FIG. 6** is a flow chart of a method according to an example. In one example, the method comprises obtaining **210** a target electromagnetic resonance frequency, and determining **220** a delta between the determined electromagnetic resonance frequency and the target electromagnetic resonance frequency.

In one example, the method comprises determining **230** a magnetic pole position of the permanent magnets **106a, 106b, 106c** of the actuator **105.** Information relating to the magnetic pole position may be obtained from a sensor.

In one example, the method further comprises controlling **240** the phase of the plurality of permanent magnets **106a, 106b, 106c** of the actuator **105.**

The method comprises controlling **250** the behavior of at least a first stator coil **109a** so that it is configured to act as an electromagnet creating an electromagnetic field. Controlling the behavior of at least a first stator **coil 109a** is performed by reversing **270** the flow of current in at least the first stator coil **109a** by feeding energy, from the energy storage system **130** into at least the first stator **coil 109a.**

The method further comprises controlling **260** the behavior of at least a second stator **coil 109b** so that it is configured to act as a generator, and thereby generating energy **to** an energy storage system **130.** Controlling the behavior of at least a second stator coil**109b** may be performed by reversing **270** the flow of current in at least the second stator **coil 109b.** In one example, behavior is controlled by limiting the current.

The method may further comprise controlling the behavior of the stator coils **109a, 109b** so that electrical resonance is achieved.

In one example, the controlling **250** the behavior of at least a first stator **coil 109a** and controlling **260** the behavior of at least a second stator **coil 109b** is based on the determined magnetic pole position of the actuator **105** and the delta of electromagnetic resonance frequency.

By controlling the behavior of at least a first stator **coil 109a** and controlling **260** the behavior of at least a second stator **coil 109b** it is possible to control the damping of the vehicle. The energy caused upon the vehicle going over uneven surfaces will be stored in the system **200.** In one example, by controlling the behavior of at least a first stator coil and controlling the behavior of at least a second stator coil, it is possible to control the damping of the vehicle. This dynamic control allows the system to adapt to varying road conditions, thereby enhancing passenger comfort and vehicle stability. The energy caused by the vehicle traversing uneven surfaces can be effectively stored within the system, converting kinetic disturbances into reusable energy. The system may comprise various strategies to accommodate different levels of damping, tailored to achieve specific comfort levels. For instance, the system could include a soft damping strategy aimed at maximizing passenger comfort by minimizing vibrations transmitted through the vehicle's chassis. This strategy may be particularly beneficial for luxury vehicles where ride smoothness is a priority. Conversely, a firmer damping strategy could be employed to enhance handling and vehicle control, suitable for performance-oriented vehicles or off-road conditions where stability is paramount. Moreover, the system could offer an adaptive damping strategy that dynamically adjusts the damping level in real-time based on sensor inputs, such as speed, road surface conditions, and load distribution. This adaptability ensures optimal comfort and performance across a range of driving scenarios. Through these various strategies, the disclosed technology provides a versatile approach to managing vehicle dynamics, enhancing both energy efficiency and ride quality.

**FIG. 7** is a flow chart of a method according to an example. The method comprises controlling **250,** by the processing circuitry, the behavior of at least a first stator **coil 109a** so that it is configured to act as an electromagnet creating an electromagnetic field; and controlling **260,** by the processing circuitry, the behavior of at least a second stator coil **109b** so that it is configured to act as a generator, and thereby generating energy to an energy storage system **130.**

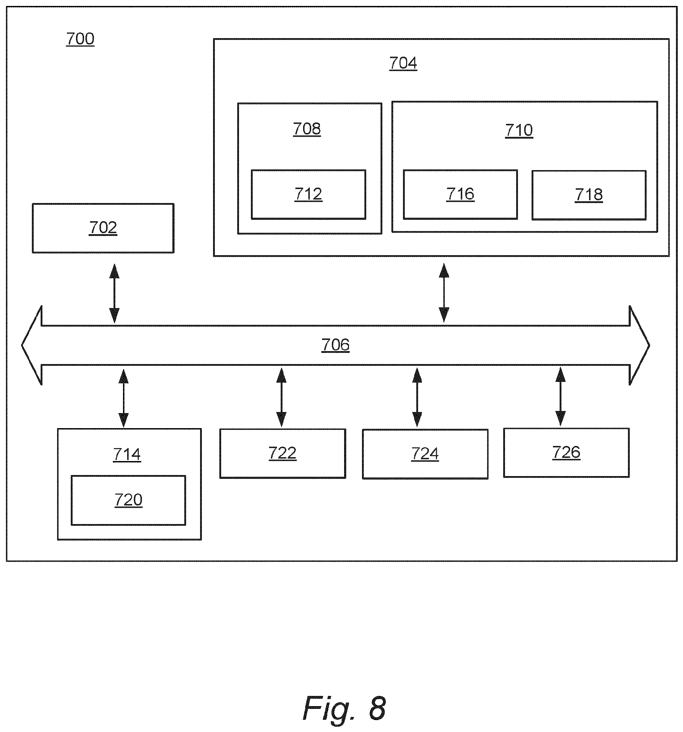

**FIG. 8** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system 700 may include processing circuitry **702**(e.g., processing circuitry including one or more processor devices or control units), a memory **704,** and a system bus **706**. The computer system **700** may include at least one computing device having the processing circuitry **702**. The system bus **706** provides an interface for system components including, but not limited to, the memory **704** and the processing circuitry **702.** The processing circuitry **702**may include any number of hardware components for conducting data or signal processing or for executing computer code stored in memory **704.** The processing circuitry **702**may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702**may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702**(e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702**to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702**may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702**through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry, configured to control a linear machine (100) of a vehicle (10), said linear machine (100) comprising an actuator (105) having a plurality of permanent magnets (106a, 106b, 106c) and at least one stator (108) comprising at least a first stator coil (109a) and second stator coil (109b), the processing circuitry (700) being configured to:
determine an electromagnetic resonance frequency of the linear machine (100),
dynamically control the behavior of at least the first stator coil (109a) so that it is configured to act as an electromagnet creating an electromagnetic field by reversing the flow of current in at least the first stator coil (109a) by feeding energy, from an energy storage system (130) into at least the first stator coil (109a), and
control the behavior of at least the second stator coil (109b) so that it is configured to act as a generator, and thereby generating energy to the energy storage system (130),
wherein the first and second stator coils (109a, 109b) each independently act as either an electromagnet or a generator,
wherein the control of the behavior of at least the first stator coil (109a) and/or at least the second stator coil (109b) is based on said electromagnetic resonance frequency,
and wherein the behavior of at least the first stator coil (109a) and/or at least the second stator coil (109b) is controlled to control the damping of the vehicle (10).

2. The computer system according to claim 1, further configured to control the behavior of the stator coils (109a, 109b) so that electrical resonance is achieved.

3. The computer system of any of claims 1-2, further configured to:
obtain a target electromagnetic resonance frequency,
determine a delta between the determined electromagnetic resonance frequency and the target electromagnetic resonance frequency, and
control the behavior of at least the first stator coil (109a) and/or at least the second stator coil (109b) based on said target electromagnetic resonance frequency.

4. The computer system of any of claims 1-3, further configured to:
determine a magnetic pole position of the permanent magnets (106a, 106b, 106c) of the actuator (105).

5. The computer system of claim 4, wherein the magnetic pole position is determined based on sensor data received from at least one sensor.

6. The computer system of claim 3 and 4, further configured to:
control the flow of current in at least the first stator coil (109a), wherein said control of the flow of current is based on the determined magnetic pole position of the actuator (105) and the determined delta.

7. The computer system of claim 1 and 4, further configured to:
control the current flow in the first stator coil (109a) and the second stator coil (109b) based on the determined magnetic pole position of the actuator (105) and the electromagnetic resonance frequency.

8. The computer system of any of claims 1-7, further configured to:
control the phase of the plurality of permanent magnets (106a, 106b, 106c) of the actuator (105).

9. A vehicle comprising the computer system of any of claims 1-8, a linear generator (100) comprising an actuator (105) having a plurality of permanent magnets (106a, 106b, 106c), and at least one stator (108) comprising at least a first stator coil (109a) and second stator coil (109b), wherein the vehicle further comprises an energy storage system (130).

10. The vehicle of claim 9, further comprising a power electronic converter (110) and one or more DC-to-DC converters (140).

11. A computer-implemented method for controlling a linear machine (100) of a vehicle (10), the method comprising:
determining an electromagnetic resonance frequency of the linear machine (100),
dynamically controlling (250), by a processing circuitry, the behavior of at least a first stator coil (109a) so that it is configured to act as an electromagnet creating an electromagnetic field by reversing the flow of current in at least the first stator coil (109a) by feeding energy, from an energy storage system (130) into at least the first stator coil (109a); and
controlling (260), by the processing circuitry, the behavior of at least a second stator coil (109b) so that it is configured to act as a generator, and thereby generating energy to the energy storage system (130),
wherein the first and second stator coils (109a, 109b) each independently act as either an electromagnet or a generator,
wherein the control the behavior of at least the first stator coil (109a) and/or at least the second stator coil (109b) is based on said electromagnetic resonance frequency and wherein the behavior of at least the first stator coil (109a) and/or at least the second stator coil (109b) is controlled to control the damping of the vehicle (10).

12. A computer program product comprising instructions to cause the computer system of claim 1 to carry out the computer-implemented method of claim 11.

13. A non-transitory computer-readable storage medium having stored thereon the computer program product of claim 12.

## Patentansprüche

1. Ein Computersystem, das Verarbeitungsschaltungen umfasst, die so konfiguriert sind, dass sie eine lineare Maschine (100) eines Fahrzeugs (10) steuern, wobei die lineare Maschine (100) einen Aktuator (105) mit einer Vielzahl von Permanentmagneten (106a, 106b, 106c) und mindestens einem Stator (108) umfasst, der mindestens eine erste Statorspule (109a) und eine zweite Statorspule (109b) aufweist, wobei die Verarbeitungsschaltungen (700) konfiguriert sind, um:
eine elektromagnetische Resonanzfrequenz der linearen Maschine (100) zu bestimmen,
das Verhalten von mindestens der ersten Statorspule (109a) dynamisch zu steuern, sodass diese so konfiguriert ist, dass sie als Elektromagnet wirkt und ein elektromagnetisches Feld erzeugt, indem der Stromfluss in mindestens der ersten Statorspule (109a) umgekehrt wird, indem Energie aus einem Energiespeichersystem (130) in mindestens die erste Statorspule (109a) eingespeist wird, und
das Verhalten von mindestens der zweiten Statorspule (109b) so zu steuern, dass diese so konfiguriert ist, dass sie als Generator fungiert und dadurch Energie für das Energiespeichersystem (130) erzeugt,
wobei die erste und die zweite Statorspule (109a, 109b) jeweils unabhängig entweder als Elektromagnet oder als Generator wirken,
wobei die Steuerung des Verhaltens von mindestens der ersten Statorspule (109a) und/oder von mindestens der zweiten Statorspule (109b) auf der genannten elektromagnetischen Resonanzfrequenz basiert,
und wobei das Verhalten von mindestens der ersten Statorspule (109a) und/oder von mindestens der zweiten Statorspule (109b) so gesteuert wird, dass die Dämpfung des Fahrzeugs (10) gesteuert wird.

2. Das Computersystem gemäß Anspruch 1, das ferner so konfiguriert ist, dass das Verhalten der Statorspulen (109a, 109b) gesteuert wird, so dass eine elektrische Resonanz erreicht wird.

3. Das Computersystem gemäß einem der Ansprüche 1-2, das ferner so konfiguriert ist, dass:
eine Ziel-elektromagnetische Resonanzfrequenz ermittelt wird,
bestimmen eines Deltas zwischen der ermittelten elektromagnetischen Resonanzfrequenz und der Ziel-elektromagnetischen Resonanzfrequenz, und
steuern des Verhaltens von mindestens der ersten Statorspule (109a) und/oder mindestens der zweiten Statorspule (109b) basierend auf der genannten Ziel-elektromagnetischen Resonanzfrequenz.

4. Das Computersystem gemäß einem der Ansprüche 1-3, das ferner so konfiguriert ist, dass:
eine magnetische Polposition der Permanentmagnete (106a, 106b, 106c) des Aktors (105) ermittelt wird.

5. Das Computersystem gemäß Anspruch 4, wobei die magnetische Polposition basierend auf Sensordaten ermittelt wird, die von mindestens einem Sensor empfangen werden.

6. Das Computersystem gemäß den Ansprüchen 3 und 4, das ferner so konfiguriert ist, dass:
der Stromfluss in mindestens der ersten Statorspule (109a) gesteuert wird, wobei die Steuerung des Stromflusses auf der Grundlage der ermittelten magnetischen Polposition des Aktors (105) und des ermittelten Deltas erfolgt.

7. Das Computersystem gemäß den Ansprüchen 1 und 4, das ferner so konfiguriert ist, dass:
der Stromfluss in der ersten Statorspule (109a) und der zweiten Statorspule (109b) basierend auf der ermittelten magnetischen Polposition des Aktors (105) und der elektromagnetischen Resonanzfrequenz gesteuert wird.

8. Das Computersystem gemäß einem der Ansprüche 1-7, das ferner so konfiguriert ist, dass:
die Phase der Vielzahl von Permanentmagneten (106a, 106b, 106c) des Aktors (105) gesteuert wird.

9. Ein Fahrzeug, umfassend das Computersystem gemäß einem der Ansprüche 1-8, einen Lineargenerator (100), umfassend einen Aktor (105) mit einer Vielzahl von Permanentmagneten (106a, 106b, 106c) und mindestens einen Stator (108) mit mindestens einer ersten Statorspule (109a) und einer zweiten Statorspule (109b), wobei das Fahrzeug ferner ein Energiespeichersystem (130) umfasst.

10. Das Fahrzeug gemäß Anspruch 9, das ferner einen Leistungselektronik-Wandler (110) und einen oder mehrere DC-zu-DC-Wandler (140) unfasst.

11. Ein computergesteuertes Verfahren zur Steuerung einer linearen Maschine (100) eines Fahrzeugs (10), wobei das Verfahren Folgendes umfasst:
Bestimmung einer elektromagnetischen Resonanzfrequenz der linearen Maschine (100),
dynamische Steuerung (250), durch Verarbeitungsschaltungen, wobei das Verhalten von mindestens einer ersten Statorspule (109a) so gesteuert wird, dass sie als Elektromagnet fungiert, der ein elektromagnetisches Feld erzeugt, indem der Stromfluss in mindestens der ersten Statorspule (109a) umgekehrt wird, indem Energie von einem Energiespeichersystem (130) in mindestens die erste Statorspule (109a) eingespeist wird; und
Steuerung (260), durch die Verarbeitungsschaltungen, des Verhaltens von mindestens einer zweiten Statorspule (109b), so dass sie so konfiguriert ist, dass sie als Generator fungiert und dadurch Energie an das Energiespeichersystem (130) liefert,
wobei die erste und die zweite Statorspule (109a, 109b) jeweils unabhängig entweder als Elektromagnet oder als Generator wirken,
wobei die Steuerung des Verhaltens von mindestens der ersten Statorspule (109a) und/oder mindestens der zweiten Statorspule (109b) auf der Grundlage der genannten elektromagnetischen Resonanzfrequenz basiert und wobei das Verhalten von mindestens der ersten Statorspule (109a) und/oder mindestens der zweiten Statorspule (109b) gesteuert wird, um die Dämpfung des Fahrzeugs (10) zu steuern.

12. Ein Computerprogrammprodukt, das Anweisungen umfasst, um das Computersystem von Patentanspruch 1 zu veranlassen, die computergestützte Methode von Patentanspruch 11 auszuführen.

13. Ein nichtflüchtiges, computerlesbares Speichermedium, auf dem das Computerprogrammprodukt nach Anspruch 12 gespeichert ist.

## Revendications

1. Un système informatique comprenant des circuits de traitement, configuré pour commander une machine linéaire (100) d'un véhicule (10), ladite machine linéaire (100) comprenant un actionneur (105) ayant une pluralité d'aimants permanents (106a, 106b, 106c) et au moins un stator (108) comprenant au moins une première bobine de stator (109a) et une deuxième bobine de stator (109b), les circuits de traitement (700) étant configurés pour :
déterminer une fréquence de résonance électromagnétique de la machine linéaire (100),
commander dynamiquement le comportement d'au moins la première bobine de stator (109a) de sorte qu'elle soit configurée pour agir en tant qu'électroaimant créant un champ électromagnétique par inversion du flux de courant dans au moins la première bobine de stator (109a) en alimentant de l'énergie, depuis un système de stockage d'énergie (130) dans au moins la première bobine de stator (109a), et
commander le comportement d'au moins la deuxième bobine de stator (109b) de sorte qu'elle soit configurée pour agir en tant que générateur, et générant ainsi de l'énergie vers le système de stockage d'énergie (130),
dans lequel les première et deuxième bobines de stator (109a, 109b) agissent chacune indépendamment en tant que soit un électroaimant soit un générateur,
dans lequel la commande du comportement d'au moins la première bobine de stator (109a) et/ou d'au moins la deuxième bobine de stator (109b) est basée sur ladite fréquence de résonance électromagnétique,
et dans lequel le comportement d'au moins la première bobine de stator (109a) et/ou d'au moins la deuxième bobine de stator (109b) est commandé pour commander l'amortissement du véhicule (10).

2. Le système informatique selon la revendication 1, en outre configuré pour commander le comportement des bobines de stator (109a, 109b) de sorte qu'une résonance électrique soit obtenue.

3. Le système informatique selon l'une quelconque des revendications1-2, en outre configuré pour :
obtenir une fréquence de résonance électromagnétique cible,
déterminer un delta entre la fréquence de résonance électromagnétique déterminée et la fréquence de résonance électromagnétique cible, et
commander le comportement d'au moins la première bobine de stator (109a) et/ou d'au moins la deuxième bobine de stator (109b) sur la base de ladite fréquence de résonance électromagnétique cible.

4. Le système informatique de l'une quelconque des revendications 1 à 3, en outre configuré pour :
déterminer une position de pôle magnétique des aimants permanents (106a, 106b, 106c) de l'actionneur (105).

5. Le système informatique de la revendication 4, dans lequel la position de pôle magnétique est déterminée sur la base de données de capteur reçues d'au moins un capteur.

6. Le système informatique des revendications 3 et 4, en outre configuré pour :
commander le flux de courant dans au moins la première bobine de stator (109a), dans lequel ladite commande du flux de courant est basée sur la position de pôle magnétique déterminée de l'actionneur (105) et le delta déterminé.

7. Le système informatique des revendications 1 et 4, en outre configuré pour :
commander le flux de courant dans la première bobine de stator (109a) et la deuxième bobine de stator (109b) sur la base de la position de pôle magnétique déterminée de l'actionneur (105) et de la fréquence de résonance électromagnétique.

8. Le système informatique de l'une quelconque des revendications 1 à 7, en outre configuré pour :
commander la phase de la pluralité d'aimants permanents (106a, 106b, 106c) de l'actionneur (105).

9. Un véhicule comprenant le système informatique de l'une quelconque des revendications 1 à 8, un générateur linéaire (100) comprenant un actionneur (105) ayant une pluralité d'aimants permanents (106a, 106b, 106c), et au moins un stator (108) comprenant au moins une première bobine de stator (109a) et une deuxième bobine de stator (109b), dans lequel le véhicule comprend en outre un système de stockage d'énergie (130).

10. Le véhicule selon la revendication 9, comprenant en outre un convertisseur électronique de puissance (110) et un ou plusieurs convertisseurs DC-DC (140).

11. Un procédé mis en œuvre par ordinateur pour commander une machine linéaire (100) d'un véhicule (10), le procédé comprenant :
la détermination d'une fréquence de résonance électromagnétique de la machine linéaire (100),
la commande dynamique (250), par un circuit de traitement, du comportement d'au moins une première bobine de stator (109a) de sorte qu'elle soit configurée pour agir en tant qu'un électroaimant créant un champ électromagnétique en inversant le flux de courant dans au moins la première bobine de stator (109a) en alimentant de l'énergie, depuis un système de stockage d'énergie (130) dans au moins la première bobine de stator (109a) ; et
la commande (260), par les circuits de traitement, du comportement d'au moins une deuxième bobine de stator (109b) de sorte qu'elle soit configurée pour agir en tant qu'un générateur, et générant ainsi de l'énergie vers le système de stockage d'énergie (130),
dans lequel les première et deuxième bobines de stator (109a, 109b) agissent chacune indépendamment en tant que soit un électroaimant soit un générateur,
dans lequel la commande du comportement d'au moins la première bobine de stator (109a) et/ou d'au moins la deuxième bobine de stator (109b) est basée sur ladite fréquence de résonance électromagnétique et dans lequel le comportement d'au moins la première bobine de stator (109a) et/ou d'au moins la deuxième bobine de stator (109b) est commandé pour commander l'amortissement du véhicule (10).

12. Un produit programme d'ordinateur comprenant des instructions pour amener le système informatique de la revendication 1
à mettre en œuvre le procédé mis en œuvre par ordinateur selon la revendication 11.

13. Support de stockage non volatile lisible par ordinateur, sur lequel est enregistré le produit programme selon la revendication 12.
